(19) Europäisches Patentamt
European Patent Office
Office européen des brevets

(11) **EP 1 915 546 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(21) Anmeldenummer: **06776830.9**

(22) Anmeldetag: **14.08.2006**

(51) Int Cl.:
***F16D 33/16*** *(2006.01)*

(86) Internationale Anmeldenummer:
**PCT/EP2006/008019**

(87) Internationale Veröffentlichungsnummer:
**WO 2007/020037 (22.02.2007 Gazette 2007/08)**

(54) **ANTRIEBSSYSTEM FÜR DEN EINSATZ IN FAHRZEUGEN UND VERFAHREN ZUR OPTIMIERUNG DES ANFAHRVORGANGES IN FAHRZEUGEN**

DRIVE SYSTEM FOR USE IN VEHICLES AND METHOD FOR OPTIMIZING A STARTING PROCESS

SYSTEME D'ENTRAINEMENT DESTINE A ETRE UTILISE DANS DES VEHICULES ET PROCEDE POUR OPTIMISER LE PROCESSUS DE DEMARRAGE DANS DES VEHICULES

(84) Benannte Vertragsstaaten:
**DE**

(30) Priorität: **16.08.2005 DE 102005039000**

(43) Veröffentlichungstag der Anmeldung:
**30.04.2008 Patentblatt 2008/18**

(73) Patentinhaber: **Voith Turbo GmbH & Co. KG**
**89522 Heidenheim (DE)**

(72) Erfinder: **KLEMENT, Werner**
**89520 Heidenheim (DE)**

(74) Vertreter: **Weitzel, Wolfgang et al**
**Dr. Weitzel & Partner**
**Patentanwälte**
**Friedenstrasse 10**
**89522 Heidenheim (DE)**

(56) Entgegenhaltungen:
EP-A1- 1 188 601    DE-C1- 3 231 368
US-A- 1 963 720

**Beschreibung**

Die Erfindung betrifft ein Antriebssystem für den Einsatz in Fahrzeugen, im einzelnen mit den Merkmalen aus dem Oberbegriff des Anspruchs 1. Ein solches Antriebssystem ist aus US-A-1,963,720 bekannt ferner ein Verfahren zur Optimierung des Anfahrvorganges in Fahrzeugen mit einem solchen Antriebssystem.

Antriebssysteme für Fahrzeuge sind in verschiedenen Ausführungen bekannt. Diese umfassen in der Regel eine Antriebsmaschine, welche über eine Drehzahl-/Drehmomentwandlungseinrichtung in Form eines Getriebes mit den anzutreibenden Rädern gekoppelt ist. Dabei umfassen die Getriebe sogenannte Anfahrelemente, welche zum Anfahren und in den untersten Fahrbereichen, das heißt bei geringen Fahrzeuggeschwindigkeiten, die Leistungsübertragung zu nachfolgenden Gangstufen übernehmen. Die Anfahrelemente können verschiedenartig ausgeführt sein. Insbesondere bei Automatgetrieben sind Ausführungen mit hydrodynamischen Drehzahl-/Drehmomentwandler, auch kurz hydrodynamischer Wandler genannt, vorbekannt.

Es ist jedoch auch denkbar, als Anfahrelement eine hydrodynamische Kupplung gemäß der Offenlegungsschrift WO 00/55527 einzusetzen. Derartige Ausführungen umfassen eine hydrodynamische Kupplung mit mindestens einem Primärrad (auch Pumpenrad) und einem Sekundärrad (auch Turbinenrad), die einen mit Betriebsmittel befüllbaren Arbeitsraum bilden.

Wie aus den Druckschriften DE 100 46 834 und DE 100 42 865 A1 bekannt ist, kann die Leistungsaufnahme der hydrodynamischen Kupplung durch die Änderung des Füllungsgrades, insbesondere mittels einer Füllungsgradsteuerung, erfolgen. Dadurch ist es möglich, die Leistungsübertragung optimal an die Erfordernisse des Einzelfalles anzupassen.

Das von der hydrodynamischen Kupplung aufnehmbare beziehungsweise durch diese übertragbare Moment richtet sich zum einen nach dem Drehzahlverhältnis zwischen dem Primärrad und Sekundärrad sowie nach den äußeren Abmessungen des Primärrades beziehungsweise des Sekundärrades, insbesondere dem Außendurchmesser des mit Betriebsmittel befüllbaren Arbeitsraumes.

Es hat sich gezeigt, dass mit den bisher in einer Getriebebaueinheit eingesetzten Anfahrelementen die theoretisch bereitstellbare Gesamtleistung der Antriebsmaschine häufig nicht in jedem Betriebsbereich, insbesondere im zeitlich letzteren Bereich während des Anfahrvorganges, der mittels der hydrodynamischen Maschine vorteilhaft verschleißfrei bewirkt wird, ausgenutzt werden kann. Die mögliche Leistungsaufnahme von herkömmlich verwendeten Anfahrelementen, die möglichst - insbesondere bei Leerlaufdrehzahl der Antriebsmaschine - mit vollgefülltem Arbeitsraum betrieben werden, ist auf die bei der entsprechenden Drehzahl der Antriebsmaschine - insbesondere bei Leerlaufdrehzahl - von der Antriebsmaschine bereitgestellte Antriebsleistung angepasst. Mit zunehmender Drehzahl nimmt jedoch die von der Antriebsmaschine zur Verfügung stellbare Antriebsleistung stärker zu als die von der hydrodynamischen Maschine des Anfahrelementes mittels deren Arbeitsmediumkreislauf übertragbare Leistung so dass es nicht möglich ist, während des gesamten Anfahrvorgangs mittels der hydrodynamischen Maschine das theoretisch maximal von der Verbrennungskraftmaschine abgebbare Moment auf das Getriebe zu übertragen. Dies führt dazu, dass zum einen der Anfahrvorgang mit wesentlich geringerem Moment bei den sich einstellenden Drehzahlen erfolgt, als die Antriebsmaschine zu liefern in der Lage ist, und damit auch weniger Leistung aufgenommen und übertragen werden kann, wodurch der gesamte Anfahrvorgang quasi langsamer vonstatten geht. Zum anderen liegen die sich einstellenden Betriebspunkte nicht im Bereich des geringsten Verbrauches, was sich negativ auf den Gesamtkraftstoffverbrauch auswirkt.

Der Erfindung liegt daher die Aufgabe zugrunde, ein Antriebssystem der eingangs genannten Art derart weiterzuentwickeln, dass diese Nachteile vermieden werden und der Anfahrvorgang hinsichtlich der zur Verfügung stehenden Leistung der Antriebsmaschine optimiert wird. Die erfindungsgemäße Lösung soll sich dabei durch einen geringen konstruktiven und steuerungstechnischen Aufwand auszeichnen.

Die erfindungsgemäße Lösung ist durch die Merkmale der Ansprüche 1 und 6 charakterisiert. Vorteilhafte Ausgestaltungen werden in den Unteransprüchen beschrieben.

Ein Antriebssystem für den Einsatz in Fahrzeugen mit einer Antriebsmaschine und mindestens einer Anfahreinheit, umfassend ein Anfahrelement in Form einer hydrodynamischen Kupplung ist erfindungsgemäß dadurch ausgestaltet dass die hydrodynamische Kupplung derart dimensioniert und ausgelegt ist, dass diese mit einem reduzierten Füllungsgrad $FG_{red-max}$, das heißt einem Füllungsgrad von weniger als 100 %, insbesondere im Bereich von 30 % bis 70 %, vorzugsweise im Bereich von 40 % bis 60 %, besonders bevorzugt von 50 % oder weniger, jeweils bezogen auf den maximal möglichen Füllungsgrad ($FG_{max} = 100$ %), Betriebspunkte im Bereich der maximalen Leistungskurve der Antriebsmaschine bei niedrigen Drehzahlen, insbesondere Leerlaufdrehzahl, erzielt. Unter "Betriebspunkte erzielen" ist dabei zu verstehen, dass die hydrodynamische Kupplung, welche im Gegensatz zu einem hydrodynamischen Wandler ausschließlich ein beschaufeltes Pumpenrad und ein beschaufeltes Turbinenrad aufweist und frei von einem feststehenden oder umlaufenden Leitrad ist, in der Lage ist, bei der von der Antriebsmaschine vorgegebenen Drehzahl das von der Antriebsmaschine auf das Pumpenrad (Primärrad) übertragene Moment mittels dem Arbeitsmediumkreislauf in der hydrodynamischen Kupplung auf das Turbinenrad (Sekundärrad) zu übertragen. Somit kann bereits mit einer teilgefüllten hydrodynamischen Kupplung das maximal von der Antriebsmaschine bei dieser Drehzahl, insbesondere bei Leerlaufdrehzahl, bereitstellbare Moment $M_{VKMmax}$ übertragen werden.

Alternativ ist auch eine Reduzierung der Leistungsübertragung beziehungsweise der Drehmomentübertragung mittels der hydrodynamischen Kupplung durch mechanische Einbauten, die in den Arbeitsmediumkreislauf im Arbeitsraum der hydrodynamischen Kupplung einbringbar sind, möglich, um die Leistungsaufnahme der hydrodynamischen Kupplung auf die maximal von der Antriebsmaschine bei Leerlaufdrehzahl beziehungsweise bei niedriger Drehzahl bereitstellbare Leistung beziehungsweise das Moment auf das von der Antriebsmaschine bei dieser Drehzahl bereitstellbare Moment zu begrenzen. Um die Leistungsaufnahme der hydrodynamischen Kupplung bei einer von der Antriebsmaschine vorgegebenen Drehzahl gegenüber der maximal bei dieser Drehzahl möglichen Leistungsaufnahme zu begrenzen, kann beispielsweise wenigstens ein Körper in den Strömungskreislauf im Arbeitsraum der hydrodynamischen Kupplung eingeschoben oder anderweitig eingebracht werden, um den Strömungskreislauf zu stören und damit die mit dem Strömungskreislauf übertragbare Leistung beziehungsweise das übertragbare Moment gegenüber jener/jenem eines ungestörten Strömungskreislaufes zu reduzieren. Dieses Einbringen von einem oder mehreren Körpern in den Strömungskreislauf im Arbeitsraum kann alternativ oder zusätzlich zu der Füllungsgradreduzierung vorgesehen werden.

Da die hydrodynamische Kupplung somit bereits bei einer gezielt vorgenommenen Reduzierung der Leistungsaufnahme die bei Leerlaufdrehzahl von der Antriebsmaschine maximal erzeugbare Leistung aufnehmen kann, ist die hydrodynamische Kupplung somit überdimensioniert, insbesondere um mehr als 30 %, vorzugsweise bis ca. 50 % hinsichtlich der von ihr bei Leerlaufdrehzahl der Antriebsmaschine theoretisch übertragbaren Leistung. Bei einer Leistungsreduzierung durch eine Reduzierung des Füllungsgrades wird die hydrodynamische Kupplung somit bei Leerlaufdrehzahl der Antriebsmaschine und insbesondere im Bereich von 100 % bis 70 % Schlupf lediglich mit einem reduzierten Füllungsgrad $FG_{red}$ betrieben. Der maximale Füllungsgrad $FG_{max}$ von 100 % wird entweder nie oder - und das ist die Regel - zumindest nicht bei Leerlaufdrehzahl der Antriebsmaschine beziehungsweise beim Anfahrvorgang im Bereich von 100 % bis 70 % Schlupf in der hydrodynamischen Kupplung eingestellt, da in diesem Fall ein Abwürgen der Antriebsmaschine bewirkt werden könnte.

In anderen Worten, zumindest zu Beginn eines Anfahrvorganges, das heißt, wenn die Räder des Fahrzeugs und damit das über das Getriebe mit den Rädern verbundene Turbinenrad der hydrodynamischen Kupplung stehen oder mit kleiner Drehzahl umlaufen (letzteres zum Beispiel beim Anfahren aus einem Rollzustand des Fahrzeugs), wird die hydrodynamische Kupplung teilgefüllt betrieben, bis ein vorgegebener kleinerer Schlupfwert in der hydrodynamischen Kupplung beispielsweise von 70% erreicht wird, weil das Fahrzeug beziehungsweise das Turbinenrad auf eine höhere Drehzahl beschleunigt worden ist. Zusätzlich oder alternativ erfolgt die vorgegebene Reduzierung der Leistungsaufnahme der hydrodynamischen Kupplung durch mechanische Einbauten.

Ob und wann (ab welchem Schlupfzustand) die hydrodynamische Kupplung mit einer maximalen Leistungsaufnahme, insbesondere einem maximalen Füllungsgrad, das heißt vollgefüllt betrieben wird, hängt von dem von der Antriebsmaschine auf die hydrodynamische Kupplung übertragbaren Drehmoment ab. Die Füllung des Arbeitsraums in der hydrodynamischen Kupplung wird idealerweise stets derart eingestellt, dass in jedem Betriebszustand beziehungsweise bei jeder Drehzahl das maximal von der Antriebsmaschine bereitstellbare Drehmoment vom Pumpenrad auf das Turbinenrad über den Arbeitsmediumkreislauf in der hydrodynamischen Kupplung übertragen wird.

Dies bedeutet, dass die Kupplungskennlinie für einen Füllungsgrad von weniger als 100 %, vorzugsweise weniger als 70 %, besonders bevorzugt weniger als 50 %, die Maximalleistungskurve der Antriebsmaschine im Bereich kleinerer Drehzahlen, beispielsweise bis ca. 1000 U/min$^{-1}$, speziell für aufgeladene Motoren, insbesondere im Bereich der Leerlaufdrehzahl, schneidet.

Mit Schlupf wird vom Fachmann der Drehzahlunterschied zwischen dem Primärrad und dem Sekundärrad der hydrodynamischen Kupplung beschrieben. 100 % Schlupf bedeutet, dass das Sekundärrad stillsteht, während das Primärrad umläuft. 0 % Schlupf bedeutet, dass das Primärrad und das Sekundärrad mit derselben Drehzahl umlaufen.

Die erfindungsgemäße Lösung hat den Vorteil, dass das maximale, theoretisch bereitstellbare Moment der Antriebsmaschine auf jeden Fall ausgenutzt werden kann. Hierzu wird eine Antriebsmaschine mit einer hydrodynamischen Kupplung kombiniert, welche Kupplung nach bisherigen Auslegungskriterien "zu groß" für die Antriebsmaschine war. Durch Reduzieren des Füllungsgrads beim Anfahren beziehungsweise im Leerlauf kann jedoch verhindert werden, dass ein zu großes "Reaktionsmoment", gegen welches die Antriebsmaschine mit ihrem maximal zur Verfügung stellbaren Antriebsmoment arbeitet, die Antriebsmaschine überlastet.

Die Erfindung nutzt dabei die Erkenntnis, dass der Momentenanstieg eines Verbrennungsmotors nicht in der gleichen Form wie bei einem hydrodynamischen Wandler oder einer hydrodynamischen Kupplung verläuft. Bei der hydrodynamischen Kupplung ist der Anstieg eine Funktion zweiter Ordnung von der Drehzahl. Wenn man nun auf eine minimale Leistungsaufnahme der hydrodynamischen Kupplung im vollgefüllten Zustand bei Leerlaufdrehzahl Rücksicht nehmen muss, so ist es nicht möglich, das maximale, theoretisch bereitstellbare Moment der Antriebsmaschine beim Anfahren bei allen Drehzahlen zu nutzen.

Die erfindungsgemäße Auslegung bietet daher den Vorteil, dass die theoretisch mögliche maximal bereitstellbare Motorleistung, insbesondere das Motormoment, zum Anfahren bei niedrigen Drehzahlen genutzt werden kann, wobei die Verlustleistung dabei sehr gering gehalten und der Kraftstoffverbrauch ebenfalls optimiert werden kann. Ferner ist mit einer derartigen Auslegung eine Kompensation mechanischer Übersetzungen möglich, da das maximale, theoretisch zur Verfügung stehende Motormoment bei einer bestimmten Drehzahl zur Verfügung steht.

Die Auslegung der hydrodynamischen Kupplung erfolgt dabei im wesentlichen hinsichtlich der Geometrie des Arbeitsraumes, welche einen sehr starken Einfluss auf das aufnehmbare Moment besitzt. Ferner werden in Abhängigkeit von dem funktionalen Zusammenhang zwischen der Geometrie, den Drehzahlen und dem aufnehmbaren Moment die theoretisch für die einzelnen Füllungsgrade vorliegenden Kennlinien erstellt und in einer entsprechenden Steuerung hinterlegt. Unter Zuhilfenahme dieser Steuerung wird die erfindungsgemäß gestaltete hydrodynamische Kupplung zu Beginn des Anfahrvorgangs lediglich mit dem maximal reduzierten Füllungsgrad $FG_{red-max}$ betrieben. Dies entspricht dem Füllungsgrad, mit welchem ein Betrieb und eine Leistungsübertragung im Antriebssystem gerade noch möglich ist, ohne dass die Antriebsmaschine abgewürgt wird, da anderenfalls die Leistungsaufnahme durch die hydrodynamische Kupplung zu hoch wäre.

Die erfindungsgemäße Lösung wird nachfolgend anhand von Figuren erläutert. Darin ist im einzelnen folgendes dargestellt:

Figur 1    verdeutlicht in schematisch vereinfachter Darstellung den Grundaufbau eines erfindungsgemäß gestalteten Antriebssystems;

Figur 2    verdeutlicht anhand eines Diagramms die Zusammenarbeit zwischen einer Antriebsmaschine und einer hydrodynamischen Kupplung gemäß der Erfindung bei theoretisch maximal möglichem Füllungsgrad $FG_{max}$ von 100 % und dem reduzierten Füllungsgrad $FG_{red-max}$;

Figur 3    verdeutlicht einander gegenübergestellt das Zusammenwirken zwischen Antriebsmaschine und einer Ausführung gemäß dem Stand der Technik, im hydrodynamischen Wandler und einer erfindungsgemäß gestalteten hydrodynamischen Kupplung;

Figur 4    verdeutlicht anhand eines Signalflussbildes ein Verfahren zur Optimierung des Anfahrvorganges in einem Fahrzeug mit einem erfindungsgemäß gestalteten Antriebssystem.

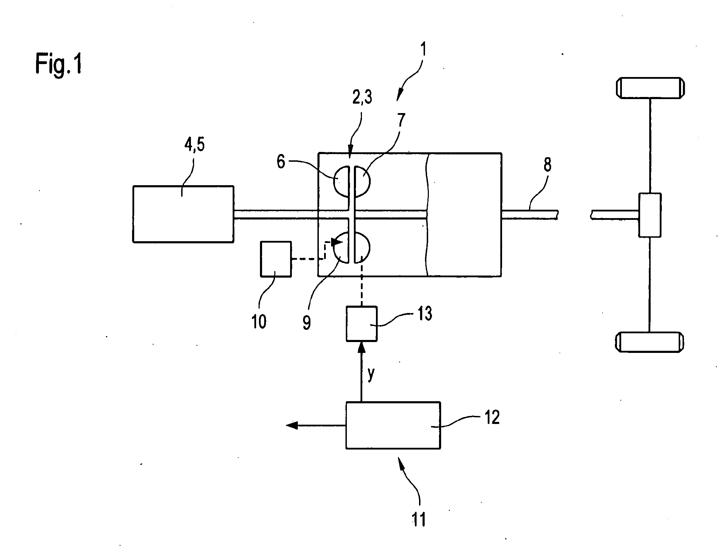

Die Figur 1 verdeutlicht in schematisch vereinfachter Darstellung ein erfindungsgemäß gestaltetes Antriebssystem 1, insbesondere zum Antrieb von Fahrzeugen mit einer erfindungsgemäß ausgelegten hydrodynamischen Kupplung 2 als Anfahrelement 3. Das Antriebssystem umfasst eine Antriebsmaschine 4 in Form einer Verbrennungskraftmaschine 5, welche über die hydrodynamische Kupplung 2 mit den anzutreibenden Rädern wenigstens mittelbar, das heißt vorliegend über weitere Übertragungselemente, beispielsweise in Form eines Getriebes, verbindbar ist. Dabei erfolgt zumindest für einen Betriebsbereich in Form des Anfahrvorganges die Leistungsübertragung zwischen der Antriebsmaschine 4 und den anzutreibenden Rädern über die hydrodynamische Kupplung 2. In den übrigen Betriebsbereichen kann die hydrodynamische Kupplung entweder im Leistungsfluss umgangen oder aber durch Überbrückung aus dem Leistungsfluss entnehmbar sein.

Die hydrodynamische Kupplung 2 ist befüll- und entleerbar. Vorzugsweise ist diese ferner steuerbar und/oder regelbar, das heißt der Füllungsgrad (FG) ist gezielt einstellbar.

Die hydrodynamische Kupplung 2 umfasst zumindest ein Primärrad 6 (auch Pumpenrad genannt), welches mit der Antriebsmaschine 4 wenigstens mittelbar verbindbar ist, das heißt entweder mit dieser drehfest verbunden ist oder aber von dieser entkoppelbar ist, und ein Sekundärrad 7 (auch Turbinenrad genannt), welches mit einem Abtrieb 8, der mit den anzutreibenden Rädern drehfest verbindbar, vorzugsweise verbunden ist, wenigstens mittelbar verbindbar ist. Primärrad 6 und Sekundärrad 7 bilden miteinander einen mit Betriebsmittel befüllbaren Arbeitsraum 9 aus, welcher mit einem Betriebsmittelversorgungssystem 10, welches hier nur schematisch angedeutet ist und verschiedenartig ausgeführt sein kann, verbunden ist. Erfindungsgemäß ist die hydrodynamische Kupplung 2 derart ausgelegt, dass diese bei Vollfüllung, das heißt bei $FG_{max}$ und 100% Schlupf zwischen dem Primärrad 6 und dem Sekundärrad 7, das heißt bei einem Drehzahlverhältnis $\nu = \dfrac{n_T}{n_P}$ von 0 ein Moment

$M_{2auf}$ aufnehmen kann, welches größer ist als das von der Antriebsmaschine 4 theoretisch abgebbare maximale Moment $M_{VKMab-max}$.

Um zu einer derart ausgelegten hydrodynamischen Kupplung 2 zu gelangen, werden die das aufnehmbare Moment bestimmenden Größen entsprechend ausgewählt, wobei im wesentlichen die Größe des Arbeitsraumes 9 eine Rolle spielt, die sich wiederum im Durchmesser, insbesondere dem Außendurchmesser D des Primärrades, niederschlägt. Die Auslegung der hydrodynamischen Kupplung 2 ist ferner eine Funktion des Außendurchmessers $d_A$ des Arbeitsraumes 9, des Innendurchmessers $d_i$ des Arbeitsraumes 9 und der Breite B des Arbeitsraumes 9.

Durch die beschriebene für den Anfahrvorgang bei Leerlaufdrehzahl für die Antriebsmaschine 4 zu große Auslegung der hydrodynamischen Kupplung 2 wird das maximal zur Verfügung stehende Moment der Antriebsmaschine 4 in jedem Betriebsbereich ausgenutzt. Je nach Auslegung der hydrodynamischen Kupplung 2 und Einstellung des Füllungsgrades soll dabei das von der Antriebsmaschine 4 bereitstellbare maximale Moment bei der kleinsten Motordrehzahl $nVKM_{Mmin}$ übertragen werden können. Die notwendige Motordrehzahl nVKM während des Anfahrvorganges kann dabei minimiert werden. Ferner besteht ein wesentlicher Vorteil darin, dass mit einer derartigen Auslegung auch mechanische Übersetzungen kompensierbar sind, da das maximal bereitstellbare Moment $M_{VKMab-max}$ der Antriebsmaschine 4 am Getriebeeingang zur Verfügung steht.

Die Steuerung der hydrodynamischen Kupplung 2 kann vielfältig erfolgen, weshalb hier im einzelnen nicht darauf eingegangen werden muss. Als Stellgröße für die Einstellung des aufnehmbaren und damit auf das Sekundärrad 7 übertragbaren Momentes $M_{2auf}$ fungiert vorzugsweise der Füllungsgrad FG. Bezüglich der Steuerung des Füllungsgrades FG bestehen ebenfalls eine Vielzahl von Möglichkeiten. Die tatsächliche Steuerung hängt im wesentlichen von der Ausführung des Betriebsmittelversorgungssystems und der Kreislaufkonfiguration ab. Im einfachsten Fall wird der Füllungsgrad durch Aufbringen eines statischen Überlagerungsdruckes variiert. Andere Ausführungen sind denkbar.

Der hydrodynamischen Kupplung ist beispielsweise eine Steuer- und/oder Regelvorrichtung 11 zugeordnet. Diese umfasst eine Steuer- und/oder Regeleinrichtung 12, welche verschiedenste Eingangsgrößen verarbeitet und in Abhängigkeit dieser und der gewünschten Steuer- und Regelstrategie die Stellgröße y zur Ansteuerung einer Stelleinrichtung 13 der hydrodynamischen Kupplung 2 bereitstellt. Die Stelleinrichtung 13 kann beliebig ausgeführt sein. Dies hängt wiederum davon ab, auf welche Art und Weise der Füllungsgrad eingestellt werden soll. Im einfachsten Fall handelt es sich hierbei jeweils um Ventileinrichtungen oder andere Aggregate. Da dies im Ermessen des zuständigen Fachmannes liegt, wird hier im einzelnen nicht näher darauf eingegangen.

Zur Verhinderung des Überschreitens des Füllungsgrades $FG_{red}$ zumindest im Anfahrbereich, das heißt bei einem Drehzahlverhältnis von $\nu < 0{,}5$ kann eine Füllungsgradbegrenzungseinrichtung vorgesehen werden. Diese Funktion kann auch in der der hydrodynamischen Kupplung zugeordneten Steuereinrichtung integriert sein.

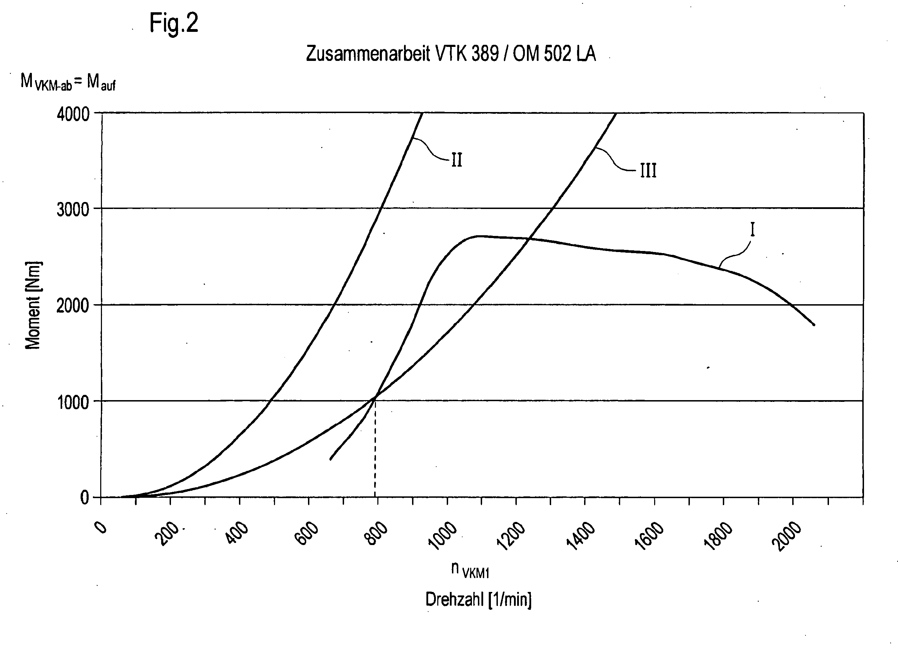

Die Figur 2 verdeutlicht anhand eines Drehzahl-/Drehmomentdiagramms die Zusammenarbeit einer hydrodynamischen Kupplung mit einer Antriebsmaschine. Die Kennlinie I verdeutlicht dabei die Volllastkennlinie der Antriebsmaschine, das heißt die Maximalleistungskurve. Die Kennlinie II verdeutlicht das aufnehmbare Moment $M_{2auf}$ der hydrodynamischen Kupplung, insbesondere das vom Primärrad auf das Sekundärrad übertragbare Moment bei maximalem Füllungsgrad $FG_{max}$, das heißt 100 % Befüllung. Daraus ist ersichtlich, dass über die Drehzahl n betrachtet mit vollgefüllter hydrodynamischer Kupplung bei 100 % Schlupf zu keinem Zeitpunkt eine Leistungsübertragung über die hydrodynamische Kupplung möglich wäre. Die Verbrennungskraftmaschine würde nämlich abgewürgt.

Die Kennlinie III verdeutlicht das mit einer erfindungsgemäß dimensionierten und beim Anfahrvorgang teilgefüllten hydrodynamischen Kupplung aufnehmbare Moment, bei beispielsweise 50 %-iger Füllung. Dieser Füllungsgrad $FG_{50\%}$ entspricht einem sogenannten reduzierten Füllungsgrad $FG_{red}$. Der maximale reduzierte Füllungsgrad. $FG_{red-max}$ ist daher der Füllungsgrad, mit welchem gerade noch eine Leistungsübertragung ohne Abwürgen der Antriebsmaschine möglich ist. Der maximale reduzierte Füllungsgrad $FG_{red-max}$ liegt zwischen 40 - 70 %, vorzugsweise bei oder unter 50 %.

Der maximale reduzierte Füllungsgrad $FG_{red-max}$ wird während des Betriebes des Antriebssystems so lange nicht überschritten, wie das von der Antriebsmaschine abgebbare Moment kleiner ist als das von der hydrodynamischen Kupplung bei diesem Füllungsgrad aufnehmbare Moment. Der Stelleinrichtung ist daher vorteilhaft eine Füllungsgradbegrenzungseinrichtungseinrichtung zugeordnet. Die Begrenzung des Füllungsgrades des Arbeitsraums der hydrodynamischen Kupplung braucht erfindungsgemäß nicht auf einen konstanten vorgegebenen Wert erfolgen, sondern kann dynamisch auf einen variablen Wert erfolgen, welcher insbesondere in jedem Betriebszustand dem maximal von der Antriebsmaschine abgebbaren Moment beziehungsweise dem von der Antriebsmaschine tatsächlich abgegebenen Moment bei der vorherrschenden Drehzahl entspricht.

Um die Regelung des Füllungsgrades der hydrodynamischen Kupplung zu vereinfachen, ist es alternativ jedoch auch möglich, in einem bestimmten Betriebsbereich den Füllungsgrad auf den maximal reduzierten Füllungsgrad $FG_{red-max}$ zu begrenzen, wobei dieser Wert dann konstant gehalten werden kann, und insbesondere im übrigen Betriebsbereich die Füllungsgradbegrenzung mittels der Füllungsgradbegrenzungseinrichtung aufzuheben.

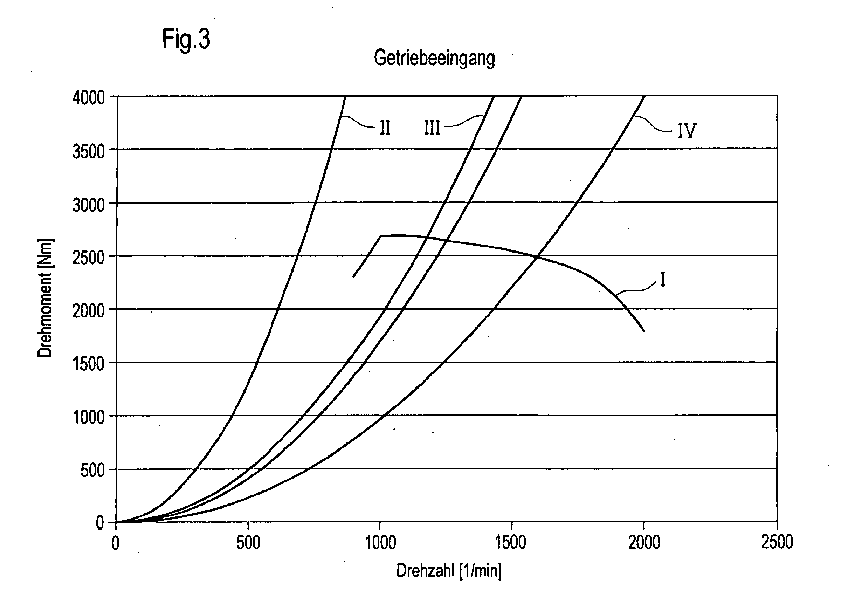

Aus der Figur 2 ist ersichtlich, dass die Maximalleistungskennlinie der Verbrennungskraftmaschine und damit das maximal aufnehmbare Moment, welches einem maximal von der Verbrennungskraftmaschine abgebbaren Moment $M_{VW-ab-max}$ entspricht, bereits bei sehr geringen Drehzahlen, hier $n_{VKM1}$, erreicht werden kann. Zum Vergleich verdeutlicht dabei die Figur 3 anhand des Drehzahl-/Drehmomendiagrammes die Leistungskennlinie IV eines hydrodynamischen Wandlers. Hier ist die Drehzahl, bei welcher der hydrodynamische Wandler das maximal von der Brennkraftmaschine abgebbare Moment aufnehmen kann, deutlich höher.

Erkennbar ist in beiden Figuren, dass der Momentenanstieg einer Verbrennungskraftmaschine nicht in der gleichen Form verläuft, wie bei einem hydrodynamischen Element, insbesondere der hydrodynamischen Kupplung. Bei dieser ist der Anstieg eine Funktion zweiter Ordnung von der Drehzahl, insbesondere der Drehzahl des Primärrades.

Wenn man nun auf die minimale Leistungsaufnahme bei Leerlaufdrehzahl Rücksicht nehmen muss, um das aufnehmbare Moment zu erreichen, welches dem maximal von der Antriebsmaschine abgebbaren Moment $M_{VKM-ab-max}$ entspricht, so kann mit hydrodynamischen Kupplungen, die bei Leerlaufdrehzahl der Antriebsmaschine vollgefüllt betrieben werden, oder mit hydrodynamischen Wandlern nicht in allen Drehzahlbereichen das maximal von der Antriebsmaschine abgebbare Moment von der Kupplung beziehungsweise dem Wandler aufgenommen und auf die Abtriebsseite übertragen werden.

Daher wird erfindungsgemäß die hydrodynamische Kupplung 2, wie sie beispielsweise in der Figur 1 dargestellt ist, quasi überdimensioniert, so dass diese bereits bei Drehzahlen des Primärrades 6 entsprechend der Leerlaufdrehzahl der Antriebsmaschine 4 beziehungsweise in Abhängigkeit hiervon bei Berücksichtigung von zwischengeschalteten Übersetzungen zwischen der Antriebsmaschine 4 und dem Primärrad 6, das von der hydrodynamischen Kupplung 2 aufnehmbare Moment beziehungsweise die aufnehmbare Leistung jenem/jener der Antriebsmaschine 4 entspricht, so dass der Antriebsmaschine 4 ermöglicht wird, ihr maximal mögliches Moment $M_{VKMab}$ abzugeben.

Allgemein bestimmt sich die Aufnahmeleistung des Primärrades 6

$$Pp = \lambda \cdot \rho \cdot d^5 \cdot \omega_P{}^3.$$

mit

$P_p$ = vom Primärrad 6 aufgenommene Leistung

$\lambda$ = Leistungszahl

$d$ = Außendurchmesser des Arbeitsraumes

$\omega_P$ = Winkelgeschwindigkeit des Primärrades 6

Das vom Primärrad aufnehmbare Moment $M_P$ bestimmt sich dabei gemäß folgender Beziehung: $M_P = \lambda \cdot \rho \cdot d^5 \cdot \omega^2$. Daraus wird ersichtlich, dass im wesentlichen der Durchmesser und die Drehzahl beziehungsweise Winkelgeschwindigkeit entscheidende Einflussgrößen für die Größe der Leistungsaufnahme sind, wobei die Auslegung der Kupplung 2 entsprechend dieser Größen erfolgt.

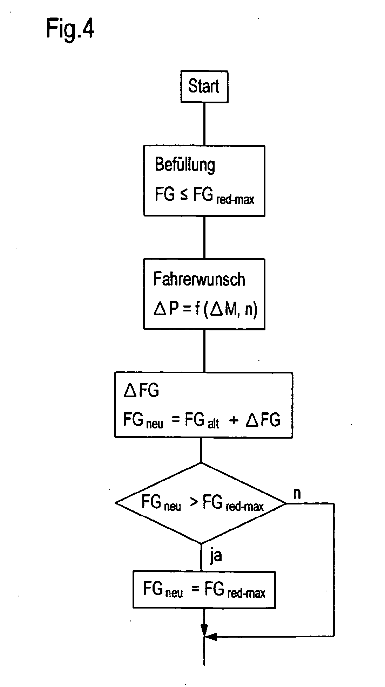

Die Figur 4 verdeutlicht in schematisch vereinfachter Darstellung anhand eines Signalflussbildes ein Verfahren zur Verbesserung des Anfahrvorganges eines Fahrzeuges mit einem erfindungsgemäßen Antriebssystem. Bei Vorliegen eines Fahrerwunsches nach Änderung oder Einstellung eines bestimmten Fahrzustandes, insbesondere beim Starten eines Fahrzeuges, wird als erstes die Antriebsmaschine in Form der Verbrennungskraftmaschine in Betrieb genommen (nicht dargestellt). Gleichzeitig oder mit geringfügig zeitlicher Verzögerung erfolgt die Einstellung eines reduzierten Füllungsgrades $FG_{red}$ in der hydrodynamischen Kupplung. Hierfür wird beispielsweise die Stelleinrichtung 13 (Figur 1) mit einer entsprechenden Stellgröße beaufschlagt. Der reduzierte Füllungsgrad $FG_{red}$ entspricht einem maximalen Füllungsgrad $FG_{max-absolut}$, welcher in einem vorbestimmten Drehzahlbereich der Antriebsmaschine nicht überschritten werden darf.

Die Einstellung des Füllungsgrades erfolgt vorzugsweise auf den reduzierten maximalen Füllungsgrad $FG_{red-max}$. Alle weiteren Änderungen in der Anforderung eines übertragbaren Momentes erfolgt durch Einstellung des Füllungsgrades FG an der hydrodynamischen Kupplung 2, wobei der Füllungsgrad immer derart gewählt ist, dass $FG_{max-red}$ nicht überschritten wird, solange die Antriebsmaschine beziehungsweise die hydrodynamische Kupplung in dem vorbestimmten Drehzahlbereich betrieben wird. Beispielsweise wird zu Beginn des Anfahrvorgangs, insbesondere beginnend mit der Leerlaufdrehzahl der Antriebsmaschine und 100 % Schlupf in der hydrodynamischen Kupplung bis zu dem Zeitpunkt, in welchem 70 % Schlupf erreicht wird, als Stellbereich für die hydrodynamische Kupplung lediglich ein Füllungsgrad im Bereich von FG > 0 bis < $FG_{red-max}$ zugelassen.

Dabei wird der Füllgrad dem Motormoment nachgeführt, wobei die Antriebsmaschine, insbesondere der Motorregler als übergeordneter Regler fungiert.

Obwohl dies in den Figuren nicht dargestellt wurde, kann ein Abwürgen der Antriebsmaschine durch eine "zu große" zwischen die Antriebsmaschine und die Antriebsräder des Kraftfahrzeugs, insbesondere zwischen die Antriebsmaschine und ein Schaltgetriebe, insbesondere automatisiertes Schaltgetriebe, geschaltete hydrodynamische Kupplung dadurch verhindert werden, dass die Leistungsaufnahme der hydrodynamischen Kupplung beim Anfahren durch mechanische Einbauten, die in den Strömungskreislauf im Arbeitsraum der hydrodynamischen Kupplung einbringbar sind, so lange reduziert wird, bis die Antriebsmaschine eine Drehzahl erreicht hat, bei welcher sie eine maximale Leistung beziehungsweise ein maximales Drehmoment übertragen kann, das gleich oder größer als die von der hydrodynamischen Kupplung bei der entsprechenden Drehzahl maximal aufnehmbare Leistung beziehungsweise das bei der entsprechenden Drehzahl maximal aufnehmbare Moment, bei vollgefülltem Arbeitsraum und einem nicht durch die mechanischen Einbauten gestörten Arbeitsmediumkreislauf im Arbeitsraum ist.

Bezugszeichenliste

| | |
|---|---|
| 1 | Antriebssystem |
| 2 | hydrodynamische Kupplung |
| 3 | Anfahrelement |
| 4 | Antriebsmaschine |
| 5 | Verbrennungskraftmaschine |
| 6 | Primärrad |
| 7 | Sekundärrad |
| 8 | Abtrieb |
| 9 | Arbeitsraum |
| 10 | Betriebsmittelversorgungssystem |
| 11 | Steuer- und/oder Regelvorrichtung |
| 12 | Steuer- und/oder Regeleinrichtung |
| 13 | Stelleinrichtung |
| D | Außendurchmesser |
| FG | Füllungsgrad |
| $FG_{max}$ | maximaler Füllungsgrad |
| ν | Drehzahlverhältnis |
| $M_{2auf}$ | aufnehmbares Moment der hydrodynamischen Kupplung |
| $M_{VKMab}$ | abgebbares Moment von Verbrennungskraftmaschine |
| $n_{VKM}$ | Motordrehzahl |
| y | Stellgröße |

**Patentansprüche**

1.  Antriebssystem (1) für den Einsatz in Fahrzeugen;

    1.1 mit einer Antriebsmaschine (4);
    1.2 mit einer Anfahreinheit, umfassend ein Anfahrelement (3) in Form einer hydrodynamischen Kupplung (2); umfassend wenigstens ein Primärrad (6) und ein Sekundärrad (7), die einen mit Betriebsmittel befüllbaren Arbeitsraum (9) bilden;
    1.3 mit Mitteln zur Einstellung der Leistungsaufnahme der hydrodynamischen Kupplung (2), umfassend mindestens eine Stelleinrichtung (13);
    1.4 die hydrodynamische Kupplung (2) ist derart ausgelegt und dimensioniert, dass sie bei Leerlaufdrehzahl der Antriebsmaschine (4) mit einer gegenüber bei dieser Drehzahl maximal möglichen Leistungsaufnahme reduzierten Leistungsaufnahme bereits das maximal von der Antriebsmaschine (4) bei dieser Drehzahl bereitstellbare Moment ($M_{VKMmax}$) aufnehmen kann;
    **dadurch gekennzeichnet, dass**
    1.5 der hydrodynamischen Kupplung (2) eine Steuer- oder Regelvorrichtung (11) zugeordnet ist, welche bei einem Anfahrvorgang des Fahrzeugs die Leistungsaufnahme der hydrodynamischen Kupplung (2) derart einstellt, dass bei jeder Drehzahl das maximal von der Antriebsmaschine (4) bereitstellbare Drehmoment vom Primärrad (6) auf das Sekundärrad (7) über den Arbeitsmediumkreislauf im Arbeitsraum (9) übertragen wird, oder
    1.6 welche die reduzierte Leistungsaufnahme der hydrodynamischen Kupplung (2) während des Anfahrvorganges in einem vorbestimmten Drehzahlbereich der Antriebsmaschine (4) auf einem konstanten Wert hält und im übrigen Drehzahlbereich der Antriebsmaschine (4) die Reduzierung der Leistungsaufnahme der hydrodynamischen Kupplung (2) aufhebt.

2.  Antriebssystem (1) gemäß Anspruch 1, **dadurch gekennzeichnet, dass** die Stelleinrichtung (13) den Füllungsgrad (FG) der hydrodynamischen Kupplung (2) einstellt, um über den Füllungsgrad (FG) die Leistungsaufnahme zu regeln, wobei die hydrodynamische Kupplung (2) derart ausgelegt und dimensioniert ist, dass sie bei Leerlaufdrehzahl der Antriebsmaschine (4) mit einem reduzierten Füllungsgrad ($FG_{red-max}$), insbesondere zwischen 30 % und 70 % vom maximal möglichen Füllungsgrad ($FG_{max}$ = 100 %), bereits das maximal von der Antriebsmaschine (4) bei dieser Drehzahl bereitstellbare Moment ($M_{VKMmax}$) aufnehmen kann.

3. Antriebssystem (1) gemäß einem der Ansprüche 1 oder 2, **dadurch gekennzeichnet, dass** die Mittel zur Einstellung der Leistungsaufnahme einen oder mehrere Körper umfassen, welche in den sich im Arbeitsraum (9) ausbildenden Strömungskreislauf eingebracht werden können, um durch Störung des Arbeitsmediumkreislaufes die Leistungsaufnahme zu regeln.

4. Antriebssystem (1) nach Anspruch 2 und insbesondere Anspruch 3, **dadurch gekennzeichnet, dass** die hydrodynamische Kupplung (2) derart ausgelegt und dimensioniert ist, dass diese im vollgefüllten Zustand ($FG_{max}$=100 %) bei Leerlaufdrehzahl der Antriebsmaschine (4) ein Moment übertragen kann, das das von der Antriebsmaschine (4) bei dieser Drehzahl bereitstellbare Moment ($M_{VKMmax}$) überschreitet.

5. Antriebssystem (1) gemäß Anspruch 2 und insbesondere einem der Ansprüche 3 oder 4, **dadurch gekennzeichnet, dass** dem Anfahrelement (3) eine Steuer- und/oder Regeleinrichtung zugeordnet ist, umfassend die Stelleinrichtung (13) zur wenigstens mittelbare Beeinflussung einen den Füllungsgrad der hydrodynamischen Kupplung (2) wenigstens mittelbar beschreibbaren Größe und eine Füllungsgradbegrenzungseinrichtung, welche eine Überschreitung des maximal reduzierten Füllungsgrades ($FG_{red-max}$) zumindest zu Beginn des Anfahrens oder im gesamten Anfahrbereich verhindert.

6. Verfahren zur Optimierung des Anfahrvorganges in Fahrzeugen mit einem Antriebssystem (1) gemäß einem der Ansprüche 1 bis 5, **dadurch gekennzeichnet, dass** bei Vorliegen eines Fahrerwunschsignals zum Durchführen eines Anfahrvorganges die hydrodynamische Kupplung (2) in Betrieb genommen wird und eine reduzierte Leistungsaufnahme der hydrodynamischen Kupplung (2) eingestellt wird, wobei die reduzierte Leistungsaufnahme kleiner ist als die bei der durch die Antriebsmaschine (4) vorgegebenen Drehzahl maximal mögliche Leistungsaufnahme der hydrodynamischen Kupplung (2), und

   - während des Anfahrvorganges die Leistungsaufnahme der hydrodynamischen Kupplung (2) derart eingestellt wird, dass bei jeder Drehzahl das maximal von der Antriebsmaschine (4) bereitstellbare Drehmoment vom Primärrad (6) auf das Sekundärrad (7) über den Arbeitsmediumkreislauf im Arbeitsraum (9) der hydrodynamischen Kupplung (2) übertragen wird, oder
   - die reduzierte Leistungsaufnahme der hydrodynamischen Kupplung (2) während des Anfahrvorganges in einem vorbestimmten Drehzahlbereich der Antriebsmaschine (4) auf einem konstanten Wert gehalten wird und im übrigen Drehzahlbereich der Antriebsmaschine (4) die Reduzierung der Leistungsaufnahme der hydrodynamischen Kupplung (2) aufgehoben wird.

7. Verfahren gemäß Anspruch 6, **dadurch gekennzeichnet, dass** ein reduzierter Füllungsgrad in der hydrodynamischen Kupplung (2) eingestellt wird, insbesondere ein Füllungsgrad (FG) kleiner als oder gleich dem reduzierten Füllungsgrad ($FG_{red-max}$).

8. Verfahren gemäß einem der Ansprüche 6 oder 7, **dadurch gekennzeichnet, dass** während des Anfahrvorganges ein Schlupf in der hydrodynamischen Kupplung (2) zwischen 100 % und 40 %, insbesondere zwischen 100 % und 50 % oder zwischen 100 % und 70 % eingestellt wird, und der Anfahrvorgang insbesondere mit Leerlaufdrehzahl der Antriebsmaschine (4) gestartet wird.

## Claims

1. A drive system (1) for use in vehicles;

   1.1 with an engine (4);
   1.2 with a starting unit, comprising a starting element (3) in the form of a hydrodynamic coupling (2), comprising at least one primary wheel (6) and a secondary wheel (7) which form a working chamber (9) which can be filled with operating medium;
   1.3 with means for setting the power intake of the hydrodynamic coupling (2) which comprises at least one actuating device (13);
   1.4 the hydrodynamic coupling (2) is configured and dimensioned in such a way that it can already take up the maximum moment ($M_{VKMmax}$) that can be provided by the engine (4) at this speed at an idle speed of the engine (4) with a power intake which is reduced with respect to a power intake which is the maximum possible at this speed, **characterized in that**
   1.5 an open-loop or closed-loop control apparatus (11) is associated with the hydrodynamic coupling (2) which during a starting process of the vehicle sets the power intake of the hydrodynamic coupling (2) in such a way that at each speed the maximum torque that can be provided by the engine (4) is transferred from the primary wheel (6) to the secondary wheel (7) via the working medium cycle in the working chamber (9), or

1.6 which holds the reduced power intake of the hydrodynamic coupling (2) during the starting process at a constant value in a predetermined speed range of the engine (4) and cancels the reduction of the power intake of the hydrodynamic coupling (2) in the remaining speed range of the engine (4).

2. A drive system (1) according to claim 1, **characterized in that** the actuating device (13) sets the degree of filling (FG) of the hydrodynamic coupling in order to adjust the power intake via the degree of filling (FG), with the hydrodynamic coupling (2) being configured and dimensioned so that it is already capable of taking up the maximum moment ($M_{VKMmax}$) that can be provided by the engine (4) at this speed at an idle speed of the engine (4) at a reduced degree of filling ($FG_{red-max}$), especially between 30% and 70% of the maximum possible degree of filling ($FG_{max}$ = 100%).

3. A drive system (1) according to one of the claims 1 or 2, **characterized in that** the means for setting the power intake comprise one or several bodies which can be introduced into the flow cycle forming in the working chamber (9) in order to adjust the power intake by disturbing the working medium cycle.

4. A drive system (1) according to claim 2 and especially claim 3, **characterized in that** the hydrodynamic coupling (2) is configured and dimensioned in such a way that it is capable of transferring a moment in the fully filled state ($FG_{max}$ = 100%) at an idle speed of the engine which exceeds the moment ($M_{VKMmax}$) that can be provided by the engine (4) at this speed.

5. A drive system (1) according to claim 2 and especially one of the claims 3 or 4, **characterized in that** the starting element (3) is associated with an open-loop and/or closed-loop control device, comprising the actuating device (13) for influencing at least indirectly a variable describing at least indirectly the degree of filling of the hydrodynamic coupling (2) and a filling-degree limiting device which prevents any exceeding of the maximum reduced degree of filling ($FG_{red-max}$) at least at the beginning of starting or in the entire starting range.

6. A method for optimizing the starting process in vehicles with a drive system (1) according to one of the claims 1 to 5, **characterized in that** when the driver request signal is present for performing a starting process, the hydrodynamic coupling (2) is put into operation and reduced power intake of the hydrodynamic coupling (2) is set, with the reduced power intake being smaller than the maximum possible power intake of the hydrodynamic coupling (2) which would be possible at the speed predetermined by the engine (4), and

- the power intake of the hydrodynamic coupling (2) is set during the starting process in such a way that the torque that can be provided as a maximum by the engine (4) at any speed is transferred from the primary wheel (6) to the secondary wheel (7) via the working medium cycle in the working chamber (9) of the hydrodynamic coupling, or
- the reduced power intake of the hydrodynamic coupling (2) is kept at a constant value during the starting process in a predetermined speed range of the engine (4) and the reduction of the power intake of the hydrodynamic coupling (2) is cancelled in the other speed range of the drive machine (4).

7. A method according to claim 6, **characterized in that** a reduced degree of filing in the hydrodynamic coupling (2) is set, especially when a degree of filling (FG) is smaller than or equal to the reduced degree of filling ($FG_{red-}$max).

8. A method according to one of the claims 6 or 7, **characterized in that** slippage is set during the starting process in the hydrodynamic coupling (2) between 100% and 40%, especially between 100% and 50% or between 100% and 70%, and the starting process is started especially at idle speed of the engine (4).

**Revendications**

1. Système de propulsion (1) destiné à être utilisé dans des véhicules ;

1.1 avec un moteur de propulsion (4) ;
1.2 avec une unité de démarrage, comprenant un élément démarreur (3) qui prend la forme d'un accouplement hydrodynamique (2) comprenant au moins une roue primaire (6) et une roue secondaire (7) qui forment un espace de travail (9) pouvant être rempli avec un fluide de travail ;

1.3 avec des moyens pour régler la puissance absorbée par l'accouplement hydrodynamique (2), comprenant au moins un dispositif de réglage (13) ;

1.4 l'accouplement hydrodynamique (2) est conçu et dimensionné de telle façon qu'au régime en marche à vide du moteur de propulsion (4), il puisse, à une puissance absorbée réduite par rapport à la puissance absorbée maximale possible à ce régime, absorber déjà le couple maximal ($M_{VKMmax}$) que le moteur de propulsion (4) peut délivrer à ce régime ; **caractérisé en ce que**

1.5 l'accouplement hydrodynamique (2) est associé à un dispositif de commande ou de régulation (11) qui ajuste la puissance absorbée par l'accouplement hydrodynamique (2) au démarrage du véhicule de telle manière qu'à tout régime, le couple de rotation maximal pouvant être délivré par le moteur de propulsion (4) soit transmis par la roue primaire (6) à la roue secondaire (7) via le circuit de fluide de travail dans l'espace de travail (9), ou

1.6 qui maintient la puissance absorbée réduite de l'accouplement hydrodynamique (2) pendant le démarrage dans une plage de régime prédéterminée du moteur de propulsion (4) à une valeur constante et supprime, dans le reste de la plage de régime du moteur de propulsion (4), la réduction de la puissance absorbée de l'accouplement hydrodynamique (2).

2.  Système de propulsion (1) selon la revendication 1, **caractérisé en ce que** le dispositif de réglage (13) ajuste le niveau de remplissage (FG) de l'accouplement hydrodynamique (2) afin de réguler la puissance absorbée à l'aide du niveau de remplissage (FG), l'accouplement hydrodynamique (2) étant conçu et dimensionné de telle façon qu'au régime en marche à vide du moteur de propulsion (4), il puisse, avec un niveau de remplissage réduit ($FG_{red-max}$), en particulier compris entre 30 % et 70 % du niveau de remplissage maximal possible ($FG_{max} = 100$ %), absorber déjà le couple maximal ($M_{VKMmax}$) que le moteur de propulsion (4) peut délivrer à ce régime.

3.  Système de propulsion (1) selon l'une des revendications 1 ou 2, **caractérisé en ce que** les moyens de réglage de la puissance absorbée comprennent un ou plusieurs éléments qui peuvent être introduits dans le circuit d'écoulement qui se forme dans l'espace de travail (9) afin de réguler la puissance absorbée en perturbant le circuit de fluide de travail.

4.  Système de propulsion (1) selon la revendication 2 et plus spécialement la revendication 3, **caractérisé en ce que** l'accouplement hydrodynamique (2) est conçu et dimensionné de telle sorte que lorsqu'il est complètement rempli ($FG_{max} = 100$ %), il peut, au régime en marche à vide du moteur de propulsion (4), transmettre un couple qui dépasse le couple maximal ($M_{VKMmax}$) que le moteur de propulsion (4) peut délivrer à ce régime.

5.  Système de propulsion (1) selon la revendication 2 et plus spécialement l'une des revendications 3 ou 4, **caractérisé en ce que** l'élément démarreur (3) est associé à une unité de commande et de régulation, comprenant le dispositif de réglage (13) pour agir au moins indirectement sur une grandeur décrivant au moins indirectement le niveau de remplissage de l'accouplement hydrodynamique (2) et un dispositif de limitation du niveau de remplissage qui empêche le dépassement du niveau de remplissage réduit maximal ($FG_{red-max}$) au moins au début du démarrage ou pendant toute la plage de démarrage.

6.  Procédé pour l'optimisation du démarrage de véhicules dotés d'un système de propulsion (1) selon l'une des revendications 1 à 5, **caractérisé en ce qu'**en présence d'un signal de demande du conducteur pour l'exécution d'une opération de démarrage, l'accouplement hydrodynamique (2) est mis en service et une puissance absorbée réduite de l'accouplement hydrodynamique (2) est réglée, la puissance absorbée réduite étant inférieure à la puissance absorbée maximale de l'accouplement hydrodynamique (2) possible au régime déterminé par le moteur de propulsion (4), et

    - pendant le démarrage, la puissance absorbée de l'accouplement hydrodynamique (2) est réglée de telle façon qu'à tout régime, le couple de rotation maximal pouvant être fourni par le moteur de propulsion (4) soit transmis par la roue primaire (6) à la roue secondaire (7) via le circuit de fluide de travail dans l'espace de travail (9) de l'accouplement hydrodynamique (2), ou

    - la puissance absorbée réduite de l'accouplement hydrodynamique (2) pendant le démarrage est maintenue constante dans une plage de régime prédéterminée du moteur de propulsion (4) et la réduction de la puissance absorbée de l'accouplement hydrodynamique (2) est levée dans le reste de la plage de régime du moteur de propulsion (4).

7.  Procédé selon la revendication 6, **caractérisé en ce qu'**un niveau de remplissage réduit est réglé dans l'accouplement hydrodynamique (2), en particulier un niveau de remplissage (FG) inférieur ou égal au niveau de remplissage réduit ($FG_{red-max}$).

8. Procédé selon l'une des revendications 6 ou 7, **caractérisé en ce que** pendant le démarrage, un patinage compris entre 100 % et 40 %, en particulier entre 100 % et 50 % ou entre 100 % et 70 %, est réglé dans l'accouplement hydrodynamique (2), et le démarrage est lancé en particulier au régime en marche à vide du moteur de propulsion (4).

Fig.1

EP 1 915 546 B1

## Fig.2

Zusammenarbeit VTK 389 / OM 502 LA

$M_{VKM-ab} = M_{auf}$

Moment [Nm]

$n_{VKM1}$

Drehzahl [1/min]

Fig.3

Getriebeeingang

# Fig.4

```
            ┌──────────┐
            │  Start   │
            └────┬─────┘
                 │
     ┌───────────┴───────────┐
     │   Befüllung           │
     │   FG ≤ FG red-max     │
     └───────────┬───────────┘
                 │
     ┌───────────┴───────────┐
     │  Fahrerwunsch         │
     │  ΔP = f (ΔM, n)       │
     └───────────┬───────────┘
                 │
  ┌──────────────┴───────────────┐
  │  ΔFG                         │
  │  FG neu = FG alt + ΔFG       │
  └──────────────┬───────────────┘
                 │
           ◇─────┴─────◇
          ╱   FG neu >   ╲         n
         ◇   FG red-max    ◇──────────┐
          ╲               ╱           │
           ◇─────┬─────◇             │
                 │ ja                │
     ┌───────────┴───────────┐       │
     │  FG neu = FG red-max  │       │
     └───────────┬───────────┘       │
                 ▼◄─────────────────┘
                 │
```

Start

Befüllung
$FG \leq FG_{red\text{-}max}$

Fahrerwunsch
$\Delta P = f(\Delta M, n)$

$\Delta FG$
$FG_{neu} = FG_{alt} + \Delta FG$

$FG_{neu} > FG_{red\text{-}max}$    n

ja

$FG_{neu} = FG_{red\text{-}max}$

**EP 1 915 546 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1963720 A
- WO 0055527 A
- DE 10046834
- DE 10042865 A1